# EUROPÄISCHE PATENTANMELDUNG

(11) **EP 0 582 056 A2**
(43) Veröffentlichungstag der Anmeldung: **09.02.1994**
(21) Anmeldenummer: 93108672.2
(22) Anmeldetag: 28.05.1993
(51) Int. Cl.: B01D 47/06

(54) **Einrichtung zur Abluftreinigung**

(30) Priorität: 01.06.1992 DE 9207241 U
(71) Anmelder: Bachmann, Adolf, D-30457 Hannover 91 (DE)
(72) Erfinder: Bachmann, Adolf, D-30457 Hannover 91 (DE)
(74) Vertreter: Arendt, Helmut, Dipl.-Ing.

(57) **Zusammenfassung**

Eine Einrichtung zum Reinigen von mit öldunst angereicherter Abluft ist durch eine mit einem Gebläse ausgerüstete Luftabsaughaube versehen und weist eine mit einer Mehrzahl von Sprühdüsen ausgerüstete Duschkabine zum Besprühen der Abluft auf. Die Duschkabine ist mit der Absaughaube durch eine Rohrleitung verbunden. Die Duschkabine zeigt ferner einen in die freie Atmosphäre führenden Rohrleitungsanschluß und einen Sammler für das mit öl angereicherte Wasser.

## Beschreibung

Die Erfindung betrifft eine Einrichtung zum Reinigen von mit öldunst angereicherter Abluft, insbesondere von beim Metallwalzen anfallender Abluft.

Beim Walzen von Metalldünnbändern, insbesondere Aluminiumdünnbändern (Folien), auf einem Walzgerüst fällt mit öldunst angereicherte Abluft an, die nach einschlägigen Vorschriften nicht ungereinigt oder ungefiltert an die freie Atmosphäre abgegeben werden darf. Zur Erzielung einer einwandfreien Oberflächenstruktur werden Walzöle verwendet, die das unmittelbare Kontaktieren der Oberfläche des Walzgutes mit den Oberflächen der Walzen verhindern. Dabei erhitzen sich die Walzöle und begünstigt durch Turbulenzen, ausgelöst durch die rotierenden Walzen, tritt eine ölverdunstung ein. Das Gemisch aus Luft und öldunst wird durch einen Luftabsauger aufgenommen. Bei der Herstellung einer Gewichtstonne Aluminiumdünnband werden etwa 7 l öl verdunstet. Als Zeiteinheit hierfür kann etwa 1 Stunde angesetzt werden.

Die Hersteller der Walzgerüste liefern zwar zur Luftreinigung Luftreinigungseinrichtungen, es sind jedoch sehr komplizierte, mit entsprechend hohen Kosten verbundene Systeme von derzeit etwa 1,5 Mio DM für Größen mit einem Luftdurchsatz von etwa 18.000 m³/h, der mit 7 l öl angereichert ist. Die Betriebsenergie pro Jahr beträgt für die bekannten Einrichtungen etwa 150.000 DM. Unter Einschluß aller Verzinsungs- und Tilgungskosten ohne Einrechnung von Reparaturrückstellungen ist mit einer jährlichen Belastung von 450.000 DM für die Luftreinigung zu rechnen. Die Luftreinigung stellt also einen erheblichen Wirtschaftsfaktor dar.

Der Erfindung liegt daher die Aufgabe zugrunde, eine Einrichtung zur Luftreinigung zu schaffen, die technisch erheblich einfacher ist und dadurch wesentlich wirtschaftlicher betrieben werden kann. Die Lösung dieser Aufgabe zeichnet sich dadurch aus, daß eine mit einem Gebläse ausgerüstete Luftabsaughaube über dem Ort des Anfalls der Abluft mit einer Duschkabine verbunden ist, in welcher sich eine Mehrzahl von Sprühdüsen für Wasser oder eine andere geeignete Reinigungsflüssigkeit zum Binden des ölanteils der Luft befindet, wobei die Duschkabine einen in die freie Atmosphäre führenden Rohrleitungsanschluß hat und einen Sammler für das mit öl angereicherte Wasser aufweist.
Vorzugsweise befinden sich die Sprühdüsen in einer Zwischendecke der Duschkabine, wobei eine öffnung in der Zwischendecke der Luft die Möglichkeit zum Erreichen eines Luftauslasses für die Rückführung in die freie Atmosphäre bietet. Zusätzliche Sprühdüsen können an den vertikalen Wänden der Duschkabine angebracht sein.
Der Raum unterhalb der Sprühdüsen kann als Sammelraum für das mit öl angereicherte Wasser ausgebildet sein, wobei Anschlüsse zum Ableiten der gesammelten Emulsion sowohl unmittelbar zurück zu den Sprühdüsen als auch zu einem Beruhigungsgefäß vorgesehen sind. In dem Beruhigungsgefäß wird das öl von dem Wasser getrennt und kann über eine Absaugleitung zur Wiederverwendung zurück zum Walzgerüst geführt werden. Das sich am Boden des Beruhigungsgefäßes absetzende Wasser ist über eine Anschlußleitung in den Sammelraum der Duschkabine rückführbar.

Die erfindungsgemäße Einrichtung ist mit einem geringen Energieaufwand betreibbar, wobei sowohl die Reinigungsflüssigkeit, beispielsweise Wasser, als auch das zum Walzen verwendete öl dem Betrieb wieder zugeführt werden kann. Lediglich unvermeidliche, sehr geringfügige Verluste beim Wasser und beim wiedergewonnenen öl müssen ersetzt werden. Diese Verluste sind durch die hohe Reinigungsleistung der Einrichtung gewährleistet. Sie ergibt sich durch die große Kontaktfläche bei versprühtem Wasser. Ein Wassertropfen mit einem Volumen von 1 mm³ weist eine Oberfläche von 4,86 mm² auf, so daß rein rechnerisch beim Versprühen von 20 m³ Wasser eine dem Kontakt mit der Luft dienende Oberfläche von mehr als 97.000 m² entsteht. Das Ausfällen von öl aus der Luft wird noch dadurch verbessert, daß die mit öl angereicherte Abluft beim Eintritt in die Duschkabine erheblich abgekühlt wird. Die Temperatur wird von etwa 40 °C weitgehend der maximalen Wassertemperatur von 10 °C angeglichen. Die erhebliche Abkühlung der Abluft führt zu einem weiteren Ausfall von Luftfeuchtigkeit zusammen mit darin gebundenem öl.

Weitere den Erfindungsgegenstand vorteilhaft gestaltende Merkmale sind in den Ansprüchen angegeben.

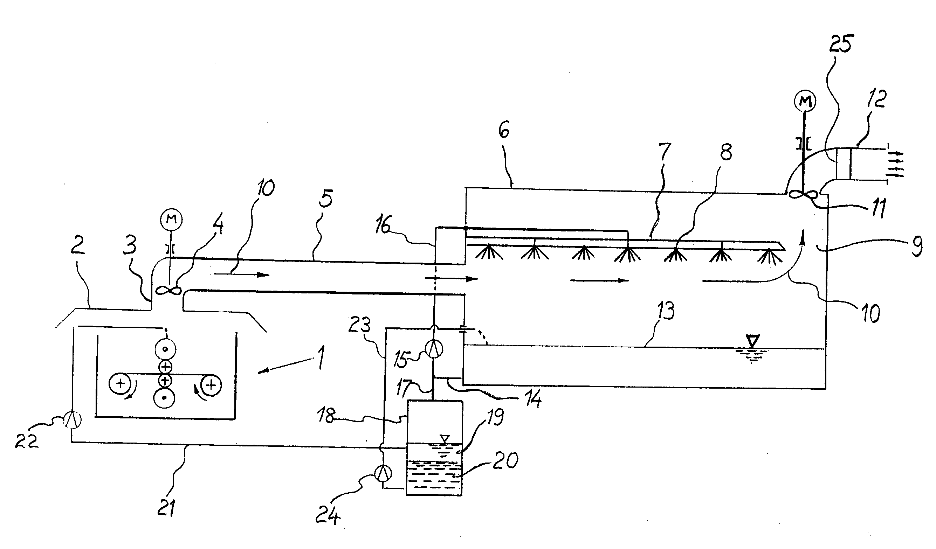

In der Zeichnung ist ein Ausführungsbeispiel der Erfindung rein schematisch dargestellt und nachstehend erläutert.

Oberhalb des Walzwerkgerüstes 1 befindet sich eine Ablufthaube 2 mit einem Absaugstutzen 3 und einem darin angeordneten Gebläse 4. Eine Rohrleitung 5 verbindet die Absaughaube 2 mit einer Duschkabine 6. Innerhalb der Duschkabine befindet sich eine Zwischendecke 7, mit einer Vielzahl daran angeordneter Sprühdüsen 8. Zusätzlich zu den an der Zwischendecke angeordneten Sprühdüsen können weitere Sprühdüsen an den vertikalen Wänden der Duschkabine 6 angeordnet sein, was jedoch zur Erhaltung einer zeichnerischen Übersichtlichkeit für das vorliegende Beispiel nicht berücksichtigt worden ist.

Die Zwischendecke 7 weist eine Durchtrittsöffnung 9 für die unter den Sprühdüsen 8 hindurchgeführte Abluft auf, deren Zwangsweg durch die mit 10 bezifferten Strömungspfeile verdeutlicht ist. Die gereinigte Luft gelangt in einen mit einem weiteren Gebläse 11 bestückten Rohrleitungsanschluß 12, der die Luft in die freie Atmosphäre zurückführt.

Unterhalb der Sprüdüsen ist die Duschkabine als Sammelraum für das mit öl angereicherte Fällungsmittel Wasser ausgebildet. Über eine Ablaufleitung 14 kann die gesammelte Emulsion 13 einer Hochdruckpumpe 15 und von dort über eine Zuführungsleitung 16 erneut den Sprühdüsen 8 zugeführt werden. Ferner kann über einen von der Ablaufleitung 14 abgezweigten Rohrstrang 17 mit öl ein Teil der Wasser/öl-Emulsion 13 in ein Beruhigungsgefäß 18 geführt werden. Dies wird dann der Fall sein, wenn durch einen mehrmaligen Kreislauf des Fällungsmittels dieses erheblich mit öl angereichert ist. Durch eine Beruhigung der Emulsion 13 innerhalb des Beruhigungsgefäßes wird das öl 19 vom Wasser 20 infolge der Dichteunterschiede getrennt. Das öl 19 befindet sich in einer Schicht auf dem Wasser und kann über eine ölabsaugleitung 21 abgezogen und mit Hilfe der ölpumpe 22 erneut dem Walzvorgang zugeführt werden. Das vom öl getrennte Wasser 20 wird über eine Rückführleitung 23 und eine Druckpumpe 24 zurück in den Sammelraum der Duschkabine 6 geführt.

Das Einleiten der Wasseremulsion 13 in das Beruhigungsgefäß kann auf die Stillstandszeiten des Walzgerüstes beschränkt werden. Hierzu bedarf es lediglich der Wahl einer genügend großen Wassermenge, die ausreicht, um das während der Betriebszeit anfallende öl durch wiederholten Umlauf aus der Luft auszufällen.

## Patentansprüche

1. Einrichtung zum Reinigen von mit öldunst angereicherter Abluft, insbesondere zum Reinigen von beim Metallwalzen anfallender Abluft, gekennzeichnet durch eine mit einem Gebläse (4) ausgerüstete Luftabsaughaube (2) und eine mit einer Mehrzahl von Sprühdüsen (8) ausgerüstete Duschkabine (6) zum Besprühen der Abluft, die durch eine Rohrleitung (5) mit der Absaughaube verbunden ist und einen in die freie Atmosphäre führenden Rohrleitungsanschluß (12) hat sowie einen Sammler für das mit öl angereicherte Wasser (Emulsion 13) aufweist.

2. Einrichtung nach Anspruch 1, dadurch gekennzeichnet, daß Sprühdüsen (8) in einer Zwischendecke (7) mit einer öffnung (9) zum Luftdurchtritt angeordnet sind.

3. Einrichtung nach Anspruch 1 oder 2, dadurch gekennzeichnet, daß zusätzliche Sprühdüsen an den vertikalen Wänden der Duschkabine angeordnet sind.

4. Einrichtung nach einem der Ansprüche 1 bis 3, dadurch gekennzeichnet, daß sich oberhalb der Sprühdüsen eine öffnung für den Austritt der gereinigten Luft in die freie Atmosphäre befindet.

5. Einrichtung nach einem der Ansprüche 1 bis 4, dadurch gekennzeichnet, daß sich in dem in die freie Atmosphäre führenden Rohrleitungsanschluß (12) ein Prallfilter (25) befindet.

6. Einrichtung nach einem der Ansprüche 1 bis 5, dadurch gekennzeichnet, daß sich in dem in die freie Atmosphäre führenden Rohrleitungsanschluß (12) zusätzlich ein Gebläse (11) befindet.

7. Einrichtung nach einem der Ansprüche 1 bis 6, dadurch gekennzeichnet, daß der Raum unterhalb der Sprühdüsen als Sammelraum für die Wasser/öl-Emulsion ausgebildet ist.

8. Einrichtung nach einem der Ansprüche 1 bis 7, dadurch gekennzeichnet, daß der Sammelraum mit Anschlüssen (14, 16, 17) zum Ableiten der gesammelten Wasser/öl-Emulsion (13) ausgerüstet ist, die sowohl zurück zu den Sprühdüsen als auch zu einem Beruhigungsgefäß (18) führbar ist.

9. Einrichtung nach Anspruch 8 dadurch gekennzeichnet, daß das Beruhigungsgefäß (18) sowohl über eine Wasserrückführleitung (23) mit dem Sammelraum der Duschkabine verbunden ist, als auch eine ölabsaugleitung (21) zur Rückführung des gewonnenen öls (19) für seine Wiederverwendung aufweist.
